# EUROPEAN PATENT SPECIFICATION

(11) **EP 3 293 904 B1**
(45) Date of publication and mention of the grant of the patent: **28.08.2019**
(21) Application number: 16290171.4
(22) Date of filing: 09.09.2016
(51) Int. Cl.: H04L 1/16, H04L 1/18

(54) **USER EQUIPMENT, NETWORK NODE, METHOD TO OPERATE A USER EQUIPMENT, AND METHOD TO OPERATE A NETWORK NODE**
BENUTZERAUSRÜSTUNG, NETZKNOTEN, VERFAHREN ZUM BETREIBEN EINER BENUTZERAUSRÜSTUNG UND VERFAHREN ZUM BEDIENEN EINES NETZKNOTENS
ÉQUIPEMENT UTILISATEUR, NOEUD DE RÉSEAU, PROCÉDÉ POUR FAIRE FONCTIONNER UN ÉQUIPEMENT UTILISATEUR ET PROCÉDÉ POUR FAIRE FONCTIONNER UN NOEUD DE RÉSEAU

(43) Date of publication of application: 14.03.2018
(73) Proprietor: Alcatel Lucent, 91620 Nozay (FR)
(72) Inventor: SAUR, Stephan, 70435 Stuttgart (DE); SCHAICH, Frank, 70435 Stuttgart (DE); WILD, Thorsten, 70435 Stuttgart (DE); AZIZ, Danish, 70435 Stuttgart (DE); BAKKER, Hajo, 70435 Stuttgart (DE)
(74) Representative: DREISS Patentanwälte PartG mbB

(56) References cited:
- US-A1- 2008 075 195
- US-A1- 2010 118 773
- US-A1- 2014 334 429

## Description

### Field of the invention

The present disclosure relates to a user equipment and to a network node and methods to operate the user equipment and the network node, respectively.

### Background

The efficient support of sporadic small data packet transmissions in wireless communications system is an evolving problem. Such sporadic transmissions typically come along with machine-type communications (MTC) services, but also as text- or keep alive messages in multiple smartphone apps. Small data packet access in uplink has been intensively studied in the meanwhile, but this traffic characteristic occurs in downlink as well.

In particular, such traffic characteristic occurs for uplink feedback after receipt of a small packet in downlink. Typically, tight uplink synchronization is required for transmitting such feedback. However, establishing or maintaining uplink synchronization for sporadic packet transmissions is a major source of signalling overhead. Such overhead is generally to be minimized to enable efficient use of energy resources of the device involved, e.g. a User Equipment (UE), as well as spectrum efficiency of the communication system in which the device operates.

US 2014/334429 A1 discloses a design of one-to-one HARQ feedback mapping with symmetric downlink/uplink carrier configuration. In this design, each downlink (DL) carrier is paired with a corresponding uplink (UL) carrier. An eNB may send data transmission on a Physical Downlink Shared Channel (PDSCH) on a particular downlink carrier to a UE. The UE may send HARQ feedback on a corresponding uplink carrier to the eNB.

US 2010/118773 A1 discloses an ACK/NACK determining unit for determining whether there is an error in each of the packets constituting a received downlink data channel and outputting the determination result as acknowledgement information.

US 2008/075195 A1) discloses a sequence modulator which receives encoded control information bits to be transmitted. The encoded control information bits are applied to an input to a phase modulator unit. The output of a reference signal (or sequence) generator such as a CAZAC codes unit is applied to a bank of multipliers that form a part of the phase modulator. The CAZAC sequence is modulated by using one of, for example, BPSK, QPSK, 8 PSK or 16QAM.

### Summary

According to a first aspect it is proposed a user equipment operable in a radio communications network. The user equipment comprises a processor, a radio transceiver, and an antenna. The radio transceiver is configured to receive data via the antenna from a network node. The processor is configured to determine whether the data has been received successfully, and to determine a response sequence in response to the successful or unsuccessful reception of the data, wherein the response sequence as a whole represents the information, whether the reception of the data by the user equipment was successful or unsuccessful. The radio transceiver is further configured to: transmit the response sequence via the antenna to the network node.

By transmitting a response sequence which represents an ACK/NACK for the received data, the user equipment can provide the respective ACK/NACK information even without a closed-loop uplink synchronization. Therefore signalling overhead in the network and calculation overhead in the participating communication entities is avoided. Especially the transmission of small uplink data packets benefits as further synchronization overhead can be avoided. By avoiding the signalling overhead the user equipment benefits from lower power consumption.

Actually, the UE does not require tight uplink synchronization for transmitting the feedback for the data received successfully or unsuccessfully in the sense of the response sequence. The response sequence can be detected and separated with/or without tight synchronization, i.e. depending on the cyclic shift length (number of shifted samples between two sequences). Two responses originating from different user equipments can be identified even if they are not received completely simultaneously, i.e. there can be an offset between the reception of the two responses that is smaller than the cyclic shift. So, establishing or maintaining closed-loop uplink synchronization for sporadic data packet transmissions does not turn out as major source for signalling overhead. Consequently, energy efficiency in the UE and spectrum efficiency of the complete system benefit. For example a complete random access procedure can be avoided for small downlink packet transmissions.

By determining a response sequence from a predetermined sequence set it is provided an advantageous embodiment according to which the network node can better detect the response sequence and separate the received response sequences. Therefore, there is no need for tight synchronization with regard to the radio signals from the user equipment to the network node. Signalling overhead regarding the transmission of the data can be drastically reduced.

Moreover, the radio transceiver is configured to receive data via the antenna on a radio resource from a network node. The processor is configured to determine the response sequence from the respective subset in dependence on a successful or unsuccessful reception of the data and in dependence on the time-frequency location of the radio resource, wherein the response sequence is a response sequence from the respective subset, and wherein the response sequence is linked with the radio resource for the transmission of the data by the network node.

Therefore, a relation between the response sequence and the radio resource conveying the downlink data is provided to the network node identifying the respective data which has to be re-transmitted in the case of an unsuccessful transmission.

According to an advantageous embodiment the processor is configured to determine a radio resource in dependence on the successful or unsuccessful reception of the data. The radio transceiver is further configured to transmit the response sequence on the determined radio resource via the antenna to the network node.

This embodiment allows to signal an ACK/NACK to the base station by means of the used uplink radio resource. This may augment the number of available sequences for other uplink signalling purposes.

According to an advantageous embodiment the processor is configured to: determine the response sequence from the respective subset in dependence on an user ID of the user equipment.

Therefore, a relation between the response sequence and identity of the user equipment is provided to the network node.

A further aspect of the description relates to the network node operable in a radio communications network, the network node comprising a processor, a radio transceiver and an antenna. The transceiver is configured to transmit data via the antenna to a user equipment, and receive a response sequence from the user equipment. The processor is configured to determine a successful or unsuccessful receipt of the data by the user equipment in dependence on the received response sequence, wherein the response sequence as a whole represents the information, whether the reception of the data by the user equipment was successful or unsuccessful.

According to an aspect of the description a method to operate a user equipment is provided. The user equipment is operable in a radio communications network and the method comprises: receiving data from a network node; determining whether the data has been received successfully, determining a response sequence, wherein the response sequence is determined from a first predetermined subset of a predetermined sequence set if the data has been received successfully, and wherein the response sequence is determined from a second predetermined subset of the sequence set if the data has been received unsuccessfully; and transmitting the response sequence to the network node. According to an aspect a method to operate a network node operable in a radio communications network, the method comprising: transmitting data to a user equipment, receiving a response sequence from the user equipment; determining a successful receipt of the data by the user equipment if the received response sequence is part of a first predetermined subset of a sequence set or determine an unsuccessful receipt of the data by the user equipment if the received response sequence is part of a second predetermined subset of the sequence set.

### Brief description of the figures

Figure 1 shows a schematic block diagram of a user equipment and a network node;
Figure 2 shows a schematic sequence diagram;
Figures 3, 4 and 10 show schematically a distribution of subsets in a sequence set, respectively;
Figure 5 shows schematically a link scheme;
Figures 6 and 7 show a schematic sequence diagram, respectively;
Figure 8 shows a schematic sequence set; and
Figure 9 shows a time frequency grid.

### Description of the embodiments

Throughout the description any references to embodiments which do not fall within the scope of the claims are to be regarded as related examples useful for understanding the invention.

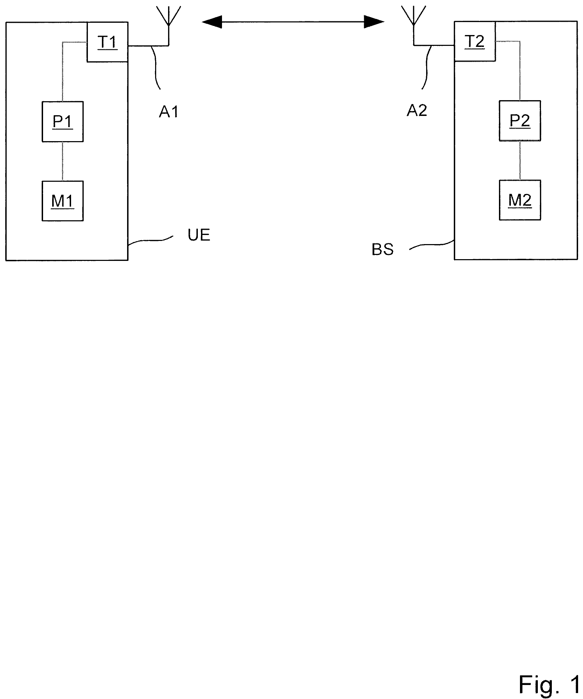

Figure 1 shows a schematic block diagram of a user equipment UE and a network node BS as part of a radio communications network. The user equipment comprises a memory M1, a processor PI, a transceiver T1, and an antenna A1. The network node the S comprises a memory M2, a processor P2, a transceiver T2, and an antenna A2. The user equipment UE and the network node BS may be communicatively coupled to each other via an air interface. Hereinafter, a transmission from network node BS to user equipment UE will be referred to as a downlink transmission, while a transmission from user terminal UE to network node BS will be referred to as an uplink transmission.

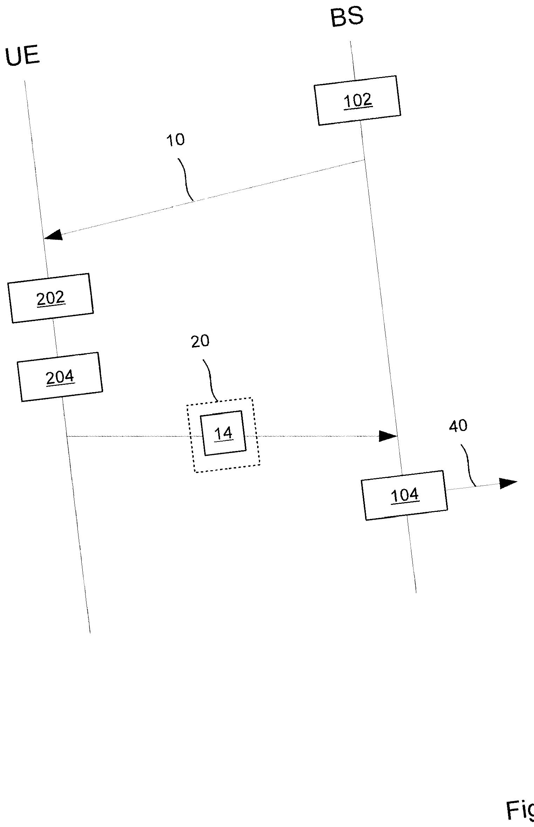

Figure 2 shows a schematic sequence diagram. In a step 102 the network node BS determines downlink data 10. The downlink data 10 comprises control information and/or payload information and is transmitted via a downlink channel to the user equipment UE. In a step to 202 the user equipment UE determines whether the data 10 has been received successfully or unsuccessfully. Depending on the result of step 202 a response sequence 14 is determined in step 204.

The response sequence 14 is a complex-valued sequence. The determination of the response sequence 14 comprises: a selection from a plurality of sequences and/or also a calculation of the response sequence 14. Therefore, the determination of the response sequence 14 remains implementation-specific. The calculation of the response sequence 14 may for example comprise a shift of a root sequence to establish the response sequence 14, whereas the selection of the response sequence 14 comprises a selection out of pre-shifted and therefore pre-calculated sequences.

According to an embodiment the response sequence 14 is a CAZAC, Constant Amplitude Zero Autocorrelation Waveform, response sequence 14 like a Zadoff-Chu sequence or a Walsh-sequence. The CAZAC response sequence 14 is a periodic complex-valued sequence with modulus one and with a cyclic autocorrelation of Zero. Especially prime-length Zadoff-Chu sequences are used to maximize the number of sequences in a sequence set 20.

According to a further embodiment the response sequence 14 is an m-sequence. The m-sequence is a maximum length sequence (MLS) that is generated using *m* linear feedback shift registers, *m* being an integer.

The response sequence 14 is transmitted via a random access uplink channel to the network node BS. The network node BS determines in step 104 that the user equipment UE has received the data 10 successfully or unsuccessfully in dependence on the received response sequence 14. Both the user equipment UE and the network node BS have a priori knowledge of the sequence set 20 comprising the response sequence 14 and the respective significance thereof. The sequence set 20 comprises a plurality of sequences being stored on a respective memory M1, M2 and/or are at least partly constructed by a respective algorithm, for example by cyclically shifting a single root sequence or a plurality thereof. A cyclical shift of a root sequence in the time domain is equivalent to applying a linear phase rotation in the frequency domain.

Alternatively or additionally the response sequence 14 is transmitted on a respective radio resource, the radio resource indicating a successful or unsuccessful reception of the data 10 at the side of the user equipment UE. This embodiment may comprise that the response sequence 14 is selected from a sub set comprising only a single sequence.

The response sequence 14 is determined in the step 204 from a respective predetermined first or second subset of the predetermined sequence set 20. If the data 10 was received successfully the response sequence 14 is determined from the first subset. If the data 10 is received unsuccessfully the response sequence 14 is determined from the second subset. The subsets of the sequence set 20 comprise at least one sequence, respectively.

The successful or unsuccessful reception of the data 10 is determined in step 202 by examining a respective field in the data 10, for example an error correcting code, ECC, or a cyclic redundancy check, CRC.

Additionally, an initiation sequence from a predetermined initiation subset of the predetermined sequence set 20 or a further predetermined sequence set can be transmitted to the network node BS. The initiation sequence is intended to initiate an uplink synchronization, e.g. a random access procedure or the like. The initiation sequence is transmitted within the same transmission time interval, TTI, as the response sequence 14, but transmitted on a further time-frequency radio resource from the user equipment UE to the network node BS. The initiation sequence can be also termed as preamble or preamble signal.

According to the embodiment according to which the initiation sequence and the response sequence 14 are determined from the same predetermined sequence set 20, the initiation subset and the subsets 16 and 18 are mutually disjoint.

According to the embodiment according to which the initiation sequence and the response sequence 14 are determined from the same or overlapping sequence sets, the initiation sequence and the response sequence 14 are transmitted via different radio resources, so that the network node BS is able to distinguish the initiation sequence from the response sequence 14.

The sequences in the sequence sets mentioned throughout this description preferably have the property of small power variations in the frequency domain to allow for similar channel-estimation quality by the network node BS for all frequencies spanned by the sequence. This is equivalent to a well-focused time-domain auto-correlation of the transmitted sequence. The sequences of the sequence sets therefore have essentially equal or at least comparable correlation properties to ensure proper reception and processing by the network node BS. Furthermore, the sequences of the sequence sets have limited power variations in the time domain, leading to low cubic metric of the transmitted signal.

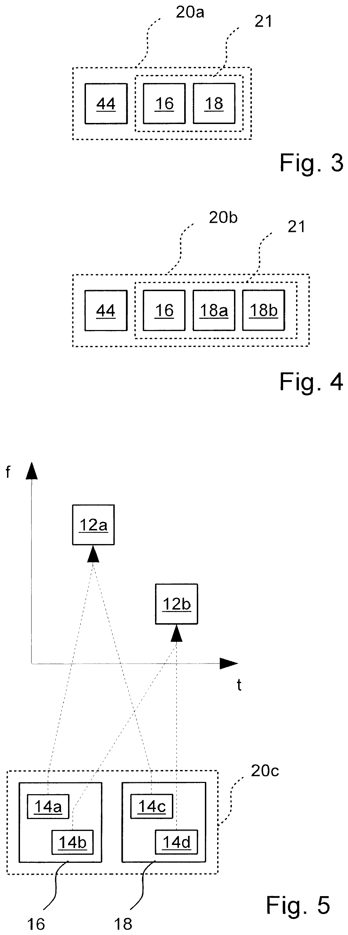

The sequence set 20 is determined by using at least one root sequence for example a Zadoff-Chu sequence and/or an m-sequence. The sequence set 20 is established by providing a plurality of cyclic shifts of the root sequence. The subsets 16 and 18 as explained in figures 3, 4 and 5 are established by dividing the number of cyclic shifts into two groups. The predetermined sequence set 20 and the predetermined subsets 16 and 18 or further subsets are known to the user equipment UE and the network node BS a priori.

In step 104 the network node BS compares the response sequence 14 as received with response sequences of the predetermined subset 20. More specifically, a pre-defined search space is examined by the network node BS, whether one of the sequences in the sequence set 20 is present. This includes a comparison of each of the sequences in the sequence set 20 with supposed sequences the search space. The network node BS determines a reception indication 40 in dependence on the comparison result of whether the received response sequence 14 is found in the respective subset 16, 18 or not.

Therefore, the reception indication 40 indicates at least a successful or unsuccessful reception of the data 10. If the expected response sequence 14 is not received, the reception indication 40 indicates an unsuccessful reception of the data 10. If the response sequence 14 is received, but is not equal to a sequence in the first or second subset 16 or 18, as outlined to figure 3 for example, the network node BS interprets this as unsuccessful reception of the data 10, and the reception indication 40 indicates an unsuccessful reception of the data 10.

According to an embodiment the user equipment UE only transmits the response sequence 14 in the case of the determination of a successful reception of the data 10. According to this embodiment, no response sequence is transmitted for an unsuccessful reception of the data. Consequently the used subset of the sequence set 20 comprises only sequence(s) which indicate a successful reception of the data 10 at the side of the user equipment UE. In step 104 the indication 40 is determined to indicate an unsuccessful receipt of the data 10 if none of the supposed sequences in the search space is found.

According to an embodiment the user equipment UE only transmits the response sequence 14 in the case of the determination of an unsuccessful reception of the data 10. In this embodiment no response sequence is transmitted for a successful reception of the data. Consequently the used subset of the sequence set 20 comprises only sequence(s) which indicate an unsuccessful reception of the data 10 at the side of the user equipment UE. In step 104 the indication 40 is determined to indicate a successful receipt of the data 10 if none of the supposed sequences in the search space is found.

The network node BS may also receive the initiation sequence described above. For example in case the initiation sequence corresponds to a random access channel preamble, the processor P2 of the network node BS may then initiate a random access procedure for the user equipment UE in dependence on the reception of the initiation sequence.

If the reception indication 40 indicates an unsuccessful reception of the data 10 then the network node BS decides to retransmit or abandon a transmission of the data 10. The network node BS continues a hybrid automatic repeat request procedure, HARQ, for the transmission of the data 10 if an unsuccessful reception is indicated via the response sequence 14.

According to an embodiment the response sequence 14 is transmitted from a single user equipment UE to the network node BS time-multiplexed with other uplink data of the same user equipment UE.

The user equipment UE represents a user equipment or machine-type equipment. The network node BS represents an individual base station or another type of access node, for example a node connected to an individual transmission point like a remote radio head. Accordingly the data 10 is transmitted in the downlink direction. The response sequence 14 is transmitted in the uplink direction.

The user equipment UE is downlink synchronized by taking into account a downlink synchronization signal. The user equipment tries to find the strongest downlink synchronization signals in the operating frequency band. Although the user equipment UE can receive the downlink synchronization signal from the network node BS at this moment, the distance to the network node BS is still uncertain which may lead to unsynchronized uplink transmission. The transmission power and time offset used for the first transmission of the user equipment UE are set according to the received power level and the transmission power of the network node BS (open loop uplink synchronization).

If the network node BS detects the uplink transmission from the user equipment UE in a suitable searching window, it will evaluate the received power level and timing. In the next downlink time slot, the network node BS may send the adjustment information to user equipment UE to modify the timing and power level for transmission and establish the uplink synchronization procedure (closed loop uplink synchronization). However, the user equipment may at any time return to open loop uplink synchronization to save energy.

Figure 3 shows schematically a distribution of subsets in a sequence set 20a. The first subset 16 is predetermined to comprise response sequences which indicate successful reception of data 10. The second subset 18 is predetermined to comprise response sequences which indicate unsuccessful reception of data 10. An initiation subset 44 comprises sequences to initiate an uplink synchronization and/or a random access procedure. The subsets 16, 18 and 44 are mutually disjoint. The subset 16 and 18 establish a sequence set 21 which is intended to transmit an indication regarding the successful or unsuccessful reception of data 10 from the user equipment UE to the network node BS.

According to an embodiment the processor P1 of the user equipment UE is configured to: determine the initiation sequence from the predetermined initiation subset 44; the radio transceiver T1 is configured to: transmit the initiation sequence on a further radio resource to the network node BS, wherein the further radio resource is different from the radio resource for the transmission of the response sequence 14, and wherein the further radio resource and the radio resource for the transmission of the response sequence 14 reside in the same transmission time interval, TTI.

Figure 4 shows schematically a distribution of subsets in a sequence set 20b. The sequence set 21 differs from the one shown in figure 3 in that a primary second predetermined subset 18a and a secondary second predetermined subset 18b are provided, which are mutually disjoint. A sequence from the primary second subset 18a indicates an unsuccessful reception of data 10 by the user equipment UE and that a retransmission of data 10 should be initiated by the network node BS with the same transmission power. A sequence from the secondary second subset 18b indicates an unsuccessful reception of data 10 by the user equipment UE and that a retransmission of data 10 should be initiated by the network node BS with an increased transmission power.

Therefore, a plurality of disjoint subsets may be provided to transmit additional information. A further embodiment comprises transmitting the same sequence from a predetermined subset a plurality of times, each time being multiplied by a complex number out of the set of 2^M symbols, e.g. {+1;-1}. The additional information, for example a request to increase transmission power for a repeated transmission of data 10, augments the respective sequence set 20 and resides in the transition from the first transmission of the sequence to the second transmission of the sequence.

Figure 5 schematically shows a link scheme. The first time-frequency radio resource 12a and the second time-frequency radio resource 12b for the transmission of respective data 10 from the network node BS to the user equipment UE are shown. In a sequence set 20c the two subsets 16 and 18 comprise respective response sequences 14. The response sequences 14a and 14c are linked with the first time-frequency radio resource 12a and refer to a successful / unsuccessful reception of data 10 via the first radio resource 12a, respectively. The response sequences 14b and 14d are linked with the second time-frequency radio resource 12b and refer to a successful / unsuccessful reception of data 10 via the second radio resource 12b. Therefore, the network node BS can distinguish between a successful and unsuccessful reception of data 10 transmitted on the respective first radio resources 12a, 12b. The network node BS has a priori knowledge of the links between the response sequences 14a to 14d and the radio resources 12a, 12b. So the network node BS can receive ACK/NACKs with a link to a respective downlink radio resource 12a, 12b from the user equipment UE.

According to an embodiment the link scheme comprises additionally that the respective predetermined response sequence 14 is linked with a precoding vector of a codebook, such as rank 1 precoding matrix indicator, PMI, or an index of a column of a precoding vector being stored in the memory M2 of the network node BS. Therefore, spatial re-use of radio resources is established.

According to a further link scheme the respective predetermined response sequences 14 are linked with an identifier of the user equipment UE. This can be established for example by determining a hash value or a checksum value of the full identifier, for example a user ID, of the user equipment UE. Therefore, response sequence is linked to a user ID, or determined depending on the user ID (e.g. index of the sequence is the checksum of the ID). Any user ID can be used. Examples: C-RNTI, IP address. This may lead to a reduced and therefore acceptable collision probability of response sequences 14 at the network node BS.

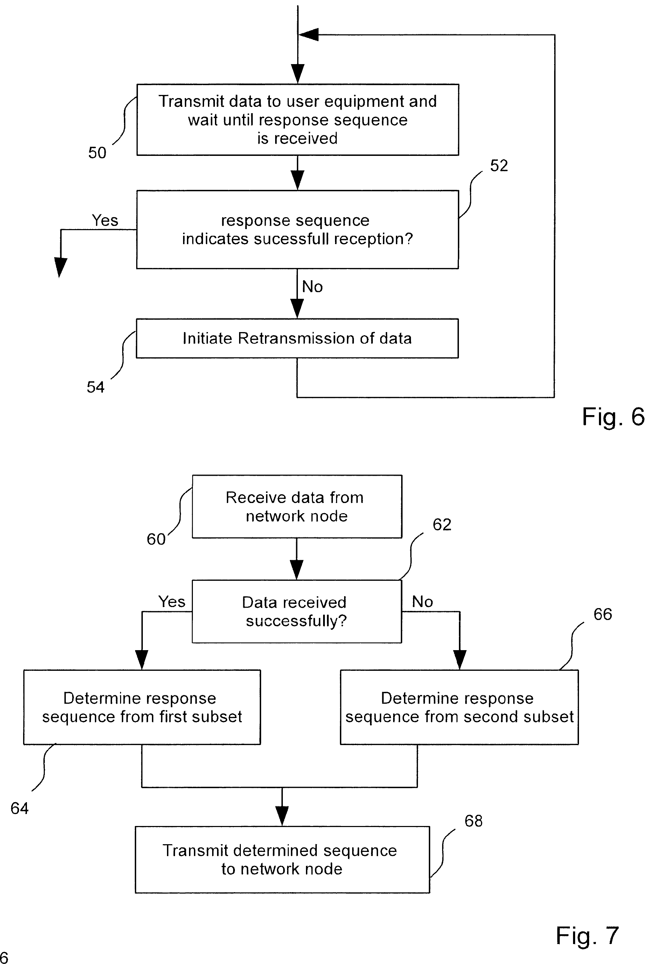

Figure 6 shows a schematic sequence diagram to operate the network node BS. When executing the steps of figure 6 the user equipment UE is preferably operated according to the open-loop uplink synchronization. According to a block 50 data 10 is transmitted to the user equipment UE and a response sequence 14 is received. According to a block 52 it is decided whether the data 10 is received successfully or unsuccessfully by the user equipment UE. In the case of a successful reception the procedure ends. In the case of an unsuccessful reception it is switched to a block 54. According to the block 54 the data 10 is retransmitted.

Figure 7 shows a sequence diagram to operate the user equipment UE. When executing the steps of figure 7 the user equipment UE is preferably operated according to the open-loop uplink synchronization. According to a block 60 data 10 is received. According to a block 62 it is decided whether data 10 was received successfully or not. In the case that the data 10 was received successfully it is switched to a block 64. In the block 64 the response sequence 14 is determined from the first subset 16. In the case that the data was received unsuccessfully it is switched to a block 66. In the block 66 it is determined the response sequence 14 from the second subset 18. After the determination of the response sequence 14 it is switched to a block 68. In the block 68 the response sequence 14 is transmitted to the network node BS.

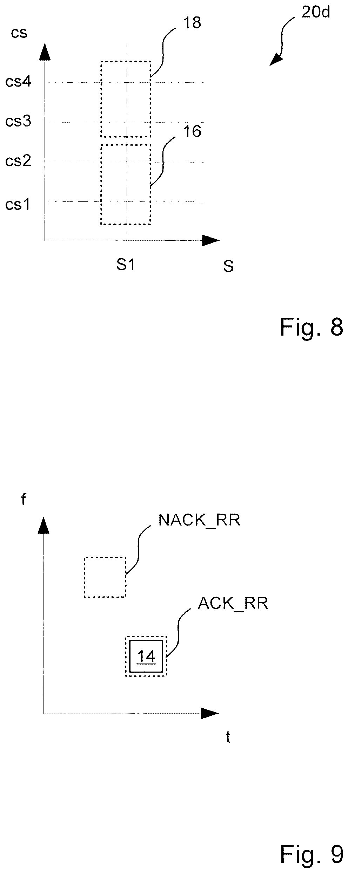

Figure 8 shows a schematic sequence set 20d. The sequence set 20d is established from a sequence space which has two dimensions: a root sequence S1 and cyclic shifts of the root sequence cs1 to cs4. The subsets 16 and 18 are established by dividing the number of cyclic shifts into two groups. Of course, further embodiments of the sequence set 20 are possible. For example further root sequences can be provided and further dimensions can be introduced by parameters of the root sequences.

Figure 9 shows a schematic time-frequency grid for the transmission of the response sequence 14. Two a-priori known locations, namely of an acknowledgement radio resource ACK-RR and of an non-acknowledgement radio resource NACK-RR, are provided to signal to the network node BS whether the data 10 has been received successfully or unsuccessfully by the user equipment UE. In the shown example the response sequence 14 indicates positively a successful reception of the data 10 as it is transmitted on the radio resource ACK-RR.

The response sequence 14 selected and transmitted on the radio resources ACK-RR and NACK-RR can be the same or can differ according to the determining schemes outlined before.

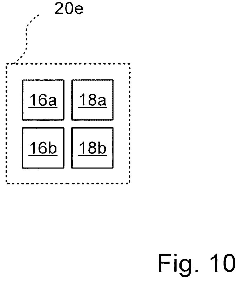

Figure 10 shows schematically a distribution of subsets in a sequence set 20e. The first subset 16a is predetermined to comprise at least one sequence which indicates successful reception of data 10 and an indication to initiate uplink synchronization for the UE. The second subset 18a is predetermined to comprise at least one sequence which indicates unsuccessful reception of data 10 and an indication to initiate uplink synchronization for the UE. The third subset 16b is predetermined to comprise at least one sequence which indicates successful reception of data 10 and no indication to initiate uplink synchronization for the UE. The fourth subset 18b is predetermined to comprise at least one sequence which indicates an unsuccessful reception of data 10 and no indication to initiate uplink synchronization for the UE.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figs, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A user equipment (UE) operable in a radio communications network, the user equipment (UE) comprising a processor (P1), a radio transceiver (T1), and an antenna (A1),
wherein the radio transceiver (T1) is configured to:
receive data (10) via the antenna (A1) on a downlink radio resource (12a, 12b) from a network node (BS);
wherein the processor (P1) is configured to:
determine whether the data (10) has been received successfully, and to
determine a response sequence (14) from a predetermined subset (16; 18) of a predetermined sequences set (20) in response to and in dependence on the successful or unsuccessful reception of the data (10) and in dependence on the time-frequency location of the downlink radio resource (12a, 12b), wherein the response sequence (14) as a whole represents the information, whether the reception of the data (10) by the user equipment (UE) was successful or
unsuccessful, and wherein the response sequence (14) is dependent on the downlink radio resource (12a, 12b) for the transmission of the data (10) by the network node (BS); and wherein the radio transceiver (T1) is further configured to:
transmit the response sequence (14) via the antenna (A1) to the network node (BS).

2. The user equipment (UE) according to claim 1, wherein the processor (P1) is further configured to:
determine a radio resource (ACK-RR; NACK-RR) in dependence on the successful or unsuccessful reception of the data (10); and
the radio transceiver (T1) is further configured to:
transmit the response sequence (14) on the determined radio resource (ACK-RR; NACK-RR) via the antenna (A1) to the network node (BS).

3. The user equipment (UE) according to one of the preceding claims, wherein the processor (P1) is configured to:
determine the response sequence (14) from the respective subset (16, 18) in dependence on an user ID of the user equipment (UE).

4. A network node (BS) operable in a radio communications network, the network node (BS) comprising a processor (P2), a radio transceiver (T2) and an antenna (A2), wherein the transceiver (T2) is configured to:
transmit data (10) via the antenna (A2) on a downlink radio resource (12a, 12b) to a user equipment (UE), and
receive a response sequence (14) from the user equipment (UE);
the processor (P2) being configured to:
determine a successful or unsuccessful receipt of the data (10) by the user equipment (UE) in dependence on the received response sequence (14), wherein the response sequence (14) as a whole represents the information, whether the reception of the data (10) by the user equipment (UE) was successful or unsuccessful, and
determine that the received response sequence (14) equals a response sequence from a respective predetermined subset (16, 18) of a predetermined sequence set (20), and wherein the response sequence is dependent on the downlink radio resource (12) for the reception of the data (10) by the user equipment (UE) .

5. The network node (BS) according to claim 4, wherein the transceiver (T2) is configured to:
receive the response sequence (14) on a radio resource (ACK-RR; NACK-RR) which indicates the successful or unsuccessful reception of the data (10); and
wherein the processor (P2) is configured to:
determine a successful or unsuccessful reception of the data (10) at the user equipment (UE) in dependence on the radio resource (ACK-RR; NACK-RR).

6. The network node (BS) according to claim 4 or 5,
wherein the processor (P2) is configured to:
determine a user ID of a user equipment (UE) depending on the received response sequence (14).

7. A radio communications network comprising the user equipment (UE) according to claim 1 or 2 and the network node (BS) according to claim 4 or 5.

8. A method to operate a user equipment (UE) operable in a radio communications network, the method comprising:
receiving data (10) on a downlink radio resource (12a, 12b) from a network node (BS);
determining whether the data (10) has been received successfully,
determining a response sequence (14) from a predetermined subset (16; 18) of a predetermined sequences set (20) in response to and in dependence on the successful or unsuccessful reception of the data (10) and in dependence on the time-frequency location of the downlink radio resource (12a, 12b), wherein the response sequence (14) as a whole represents the information, whether the reception of the data (10) by the user equipment (UE) was successful or
unsuccessful, and wherein the response sequence (14) is dependent on the downlink radio resource (12a, 12b) for the transmission of the data (10) by the network node (BS); and
transmitting the response sequence (14) to the network node (BS).

9. A method to operate a network node (BS) operable in a radio communications network, the method comprising:
transmitting data (10) to a user equipment (UE),
receiving a response sequence (14) on a downlink radio resource (12a, 12b) from the user equipment (UE);
determining a successful or unsuccessful receipt of the data (10) by the user equipment (UE) in dependence on the received response sequence (14), wherein the response sequence (14) as a whole represents the information, whether the reception of the data (10) by the user equipment (UE) was successful or unsuccessful, and
determining that the received response sequence (14) equals a response sequence from a respective predetermined subset (16, 18) of a predetermined sequence set (20), and wherein the response sequence is dependent on the downlink radio resource (12) for the reception of the data (10) by the user equipment (UE) .

## Patentansprüche

1. Teilnehmereinrichtung (UE), die in einem Funkkommunikationsnetzwerk betreibbar ist, wobei die Teilnehmereinrichtung (UE) einen Prozessor (P1), einen Funksendeempfänger (T1) und eine Antenne (A1) umfasst, wobei der Funksendeempfänger (T1) zu Folgendem ausgelegt ist:
Empfangen von Daten (10) über die Antenne (A1) auf einer Downlinkfunkressource (12a, 12b) von einem Netzwerkknoten (BS);
wobei der Prozessor (P1) zu Folgendem ausgelegt ist:
Bestimmen, ob die Daten (10) erfolgreich empfangen wurden, und zu
Bestimmen einer Antwortsequenz (14) anhand eines vorbestimmten Untersatzes (16; 18) eines vorbestimmten Sequenzsatzes (20) in Reaktion auf und in Abhängigkeit von dem erfolgreichen oder erfolglosen Empfang der Daten (10) und in Abhängigkeit von der Zeitfrequenzlage der Downlinkfunkressource (12a, 12b), wobei die Antwortsequenz (14) als Ganzes die Informationen repräsentiert, ob der Empfang der Daten (10) durch die Teilnehmereinrichtung (UE) erfolgreich oder erfolglos war, und wobei die Antwortsequenz (14) von der Downlinkfunkressource (12a, 12b) für die Übertragung der Daten (10) durch den Netzwerkknoten (BS) abhängig ist; und wobei der Funksendeempfänger (T1) ferner zu Folgendem ausgelegt ist:
Übertragen der Antwortsequenz (14) über die Antenne (A1) zum Netzwerkknoten (BS).

2. Teilnehmereinrichtung (UE) nach Anspruch 1, wobei der Prozessor (P1) ferner zu Folgendem ausgelegt ist:
Bestimmen einer Funkressource (ACK-RR; NACK-RR) in Abhängigkeit vom erfolgreichen oder erfolglosen Empfang der Daten (10); und
wobei der Funksendeempfänger (T1) ferner zu Folgendem ausgelegt ist:
Übertragen der Antwortsequenz (14) auf der bestimmten Funkressource (ACK-RR; NACK-RR) über die Antenne (A1) zum Netzwerkknoten (BS).

3. Teilnehmereinrichtung (UE) nach einem der vorhergehenden Ansprüche, wobei der Prozessor (P1) zu Folgendem ausgelegt ist:
Bestimmen der Antwortsequenz (14) anhand des jeweiligen Untersatzes (16, 18) in Abhängigkeit von einer Benutzer-ID der Teilnehmereinrichtung (UE).

4. Netzwerkknoten (BS), der in einem Funkkommunikationsnetzwerk betreibbar ist, wobei der Netzwerkknoten (BS) einen Prozessor (P2), einen Funksendeempfänger (T2) und eine Antenne (A2) umfasst, wobei der Sendeempfänger (T2) zu Folgendem ausgelegt ist:
Übertragen von Daten (10) über die Antenne (A2) auf einer Downlinkfunkressource (12a, 12b) zu einer Teilnehmereinrichtung (UE) und
Empfangen einer Antwortsequenz (14) von der Teilnehmereinrichtung (UE);
wobei der Prozessor (P2) zu Folgendem ausgelegt ist:
Bestimmen eines erfolgreichen oder erfolglosen Empfangs der Daten (10) durch die Teilnehmereinrichtung (UE) in Abhängigkeit von der empfangenen Antwortsequenz (14), wobei die Antwortsequenz (14) als Ganzes die Informationen repräsentiert, ob der Empfang der Daten (10) durch die Teilnehmereinrichtung (UE) erfolgreich oder erfolglos war, und
Bestimmen, dass die empfangene Antwortsequenz (14) mit einer Antwortsequenz von einem jeweiligen vorbestimmten Untersatz (16, 18) eines vorbestimmten Sequenzsatzes (20) übereinstimmt, und wobei die Antwortsequenz von der Downlinkfunkressource (12) für den Empfang der Daten (10) durch die Teilnehmereinrichtung (UE) abhängig ist.

5. Netzwerkknoten (BS) nach Anspruch 4, wobei der Sendeempfänger (T2) zu Folgendem ausgelegt ist:
Empfangen der Antwortsequenz (14) auf einer Funkressource (ACK-RR; NACK-RR), die den erfolgreichen oder erfolglosen Empfang der Daten (10) anzeigt; und
wobei der Prozessor (P2) zu Folgendem ausgelegt ist:
Bestimmen eines erfolgreichen oder erfolglosen Empfangs der Daten (10) an der Teilnehmereinrichtung (UE) in Abhängigkeit von der Funkressource (ACK-RR; NACK-RR).

6. Netzwerkknoten (BS) nach Anspruch 4 oder 5, wobei der Prozessor (P2) zu Folgendem ausgelegt ist:
Bestimmen einer Benutzer-ID einer Teilnehmereinrichtung (UE) in Abhängigkeit von der empfangenen Antwortsequenz (14) .

7. Funkkommunikationsnetzwerk, das die Teilnehmereinrichtung (UE) nach Anspruch 1 oder 2 und den Netzwerkknoten (BS) nach Anspruch 4 oder 5 umfasst.

8. Verfahren zum Betreiben einer Teilnehmereinrichtung (UE), die in einem Funkkommunikationsnetzwerk betreibbar ist, wobei das Verfahren Folgendes umfasst:
Empfangen von Daten (10) auf einer Downlinkfunkressource (12a, 12b) von einem Netzwerkknoten (BS);
Bestimmen, ob die Daten (10) erfolgreich empfangen wurden,
Bestimmen einer Antwortsequenz (14) anhand eines vorbestimmten Untersatzes (16; 18) eines vorbestimmten Sequenzsatzes (20) in Reaktion auf und in Abhängigkeit von dem erfolgreichen oder erfolglosen Empfang der Daten (10) und in Abhängigkeit von der Zeitfrequenzlage der Downlinkfunkressource (12a, 12b), wobei die Antwortsequenz (14) als Ganzes die Informationen repräsentiert, ob der Empfang der Daten (10) durch die Teilnehmereinrichtung (UE) erfolgreich oder erfolglos war, und wobei die Antwortsequenz (14) von der Downlinkfunkressource (12a, 12b) für die Übertragung der Daten (10) durch den Netzwerkknoten (BS) abhängig ist; und
Übertragen der Antwortsequenz (14) zum Netzwerkknoten (BS) .

9. Verfahren zum Betreiben eines Netzwerkknotens (BS), der in einem Funkkommunikationsnetzwerk betreibbar ist, wobei das Verfahren Folgendes umfasst:
Übertragen von Daten (10) zu einer Teilnehmereinrichtung (UE), Empfangen einer Antwortsequenz (14) auf einer Downlinkfunkressource (12a, 12b) von der Teilnehmereinrichtung (UE);
Bestimmen eines erfolgreichen oder erfolglosen Empfangs der Daten (10) durch die Teilnehmereinrichtung (UE) in Abhängigkeit von der empfangenen Antwortsequenz (14), wobei die Antwortsequenz (14) als Ganzes die Informationen repräsentiert, ob der Empfang der Daten (10) durch die Teilnehmereinrichtung (UE) erfolgreich oder erfolglos war, und
Bestimmen, dass die empfangene Antwortsequenz (14) mit einer Antwortsequenz von einem jeweiligen vorbestimmten Untersatz (16, 18) eines vorbestimmten Sequenzsatzes (20) übereinstimmt, und wobei die Antwortsequenz von der Downlinkfunkressource (12) für den Empfang der Daten (10) durch die Teilnehmereinrichtung (UE) abhängig ist.

## Revendications

1. Équipement d'utilisateur (UE) pouvant être utilisé dans un réseau de communication radio, l'équipement d'utilisateur (UE) comprenant un processeur (P1), un émetteur-récepteur radio (T1) et une antenne (A1),
l'émetteur-récepteur radio (T1) étant configuré pour :
recevoir des données (10) par l'intermédiaire de l'antenne (A1) sur une ressource radio en liaison descendante (12a, 12b) en provenance d'un noeud de réseau (BS) ;
le processeur (P1) étant configuré pour :
déterminer si les données (10) ont été reçues avec succès, et
déterminer une séquence de réponse (14) à partir d'un sous-ensemble prédéterminé (16, 18) d'un ensemble de séquences prédéterminé (20) en réponse à et selon la réception satisfaisante ou non satisfaisante des données (10) et selon l'emplacement temps-fréquence de la ressource radio en liaison descendante (12a, 12b), la séquence de réponse (14) représentant dans son ensemble l'information indiquant si la réception des données (10) par l'équipement d'utilisateur (UE) a été satisfaisante ou non satisfaisante, et la séquence de réponse (14) étant dépendante de la ressource radio en liaison descendante (12a, 12b) pour l'émission des données (10) par le noeud de réseau (BS) ; et
l'émetteur-récepteur radio (T1) étant en outre configuré pour :
émettre la séquence de réponse (14) par l'intermédiaire de l'antenne (A1) vers le noeud de réseau (BS).

2. Équipement d'utilisateur (UE) selon la revendication 1, dans lequel le processeur (P1) est en outre configuré pour :
déterminer une ressource radio (ACK-RR ; NACK-RR) selon la réception satisfaisante ou non satisfaisante des données (10) ; et
l'émetteur-récepteur radio (T1) est en outre configuré pour :
émettre la séquence de réponse (14) sur la ressource radio déterminée (ACK-RR ; NACK-RR) par l'intermédiaire de l'antenne (A1) vers le noeud de réseau (BS).

3. Équipement d'utilisateur (UE) selon l'une des revendications précédentes, dans lequel le processeur (P1) est configuré pour :
déterminer la séquence de réponse (14) à partir du sous-ensemble (16, 18) respectif selon un ID d'utilisateur de l'équipement d'utilisateur (UE).

4. Noeud de réseau (BS) pouvant être utilisé dans un réseau de communication radio, le noeud de réseau (BS) comprenant un processeur (P2), un émetteur-récepteur radio (T2) et une antenne (A2), l'émetteur-récepteur (T2) étant configuré pour :
émettre des données (10) par l'intermédiaire de l'antenne (A2) sur une ressource radio en liaison descendante (12a, 12b) vers un équipement d'utilisateur (UE), et
recevoir une séquence de réponse (14) en provenance de l'équipement d'utilisateur (UE) ;
le processeur (P2) étant configuré pour :
déterminer une réception satisfaisante ou non satisfaisante des données (10) par l'équipement d'utilisateur (UE) selon la séquence de réponse (14) reçue, la séquence de réponse (14) représentant dans son ensemble l'information indiquant si la réception des données (10) par l'équipement d'utilisateur (UE) a été satisfaisante ou non satisfaisante, et
déterminer que la séquence de réponse (14) reçue est égale à une séquence de réponse d'un sous-ensemble prédéterminé (16, 18) respectif d'un ensemble de séquences prédéterminé (20), et la séquence de réponse étant dépendante de la ressource radio en liaison descendante (12) pour la réception des données (10) par l'équipement d'utilisateur (UE).

5. Noeud de réseau (BS) selon la revendication 4, dans lequel l'émetteur-récepteur (T2) est configuré pour :
recevoir la séquence de réponse (14) sur une ressource radio (ACK-RR ; NACK-RR) qui indique la réception satisfaisante ou non satisfaisante des données (10) ; et
le processeur (P2) est configuré pour :
déterminer une réception satisfaisante ou non satisfaisante des données (10) au niveau de l'équipement d'utilisateur (UE) selon la ressource radio (ACK-RR ; NACK-RR).

6. Noeud de réseau (BS) selon la revendication 4 ou 5, dans lequel le processeur (P2) est configuré pour :
déterminer un ID d'utilisateur d'un équipement d'utilisateur (UE) selon la séquence de réponse (14) reçue.

7. Réseau de communication radio comprenant l'équipement d'utilisateur (UE) selon la revendication 1 ou 2 et le noeud de réseau (BS) selon la revendication 4 ou 5.

8. Procédé de fonctionnement d'un équipement d'utilisateur (UE) pouvant être utilisé dans un réseau de communication radio, le procédé comprenant :
la réception de données (10) sur une ressource radio en liaison descendante (12a, 12b) en provenance d'un noeud de réseau (BS) ;
la détermination de si les données (10) ont été reçues avec succès ;
la détermination d'une séquence de réponse (14) à partir d'un sous-ensemble prédéterminé (16, 18) d'un ensemble de séquences prédéterminé (20) en réponse à et selon la réception satisfaisante ou non satisfaisante des données (10) et selon l'emplacement temps-fréquence de la ressource radio en liaison descendante (12a, 12b), la séquence de réponse (14) représentant dans son ensemble l'information indiquant si la réception des données (10) par l'équipement d'utilisateur (UE) a été satisfaisante ou non satisfaisante, et la séquence de réponse (14) étant dépendante de la ressource radio en liaison descendante (12a, 12b) pour l'émission des données (10) par le noeud de réseau (BS) ; et
l'émission de la séquence de réponse (14) vers le noeud de réseau (BS).

9. Procédé de fonctionnement d'un noeud de réseau (BS) pouvant être utilisé dans un réseau de communication radio, le procédé comprenant :
l'émission de données (10) vers un équipement d'utilisateur (UE) ;
la réception d'une séquence de réponse (14) sur une ressource radio en liaison descendante (12a, 12b) en provenance de l'équipement d'utilisateur (UE) ;
la détermination d'une réception satisfaisante ou non satisfaisante des données (10) par l'équipement d'utilisateur (UE) selon la séquence de réponse (14) reçue, la séquence de réponse (14) représentant dans son ensemble l'information indiquant si la réception des données (10) par l'équipement d'utilisateur (UE) a été satisfaisante ou non satisfaisante ; et
la détermination que la séquence de réponse (14) reçue est égale à une séquence de réponse d'un sous-ensemble prédéterminé (16, 18) respectif d'un ensemble de séquences prédéterminé (20), et la séquence de réponse étant dépendante de la ressource radio en liaison descendante (12) pour la réception des données (10) par l'équipement d'utilisateur (UE).
